# EUROPÄISCHE PATENTANMELDUNG

(11) **EP 1 234 535 A2**
(43) Veröffentlichungstag der Anmeldung: **28.08.2002**
(21) Anmeldenummer: 01127054.3
(22) Anmeldetag: 14.11.2001
(51) Int. Cl.: A47J 37/12, A47G 23/08

(54) **Fonduegerät**

(30) Priorität: 21.02.2001 DE 20103109 U
(71) Anmelder: petra-electric Peter Hohlfeldt GmbH & Co., 89331 Burgau (DE)
(72) Erfinder: Genitheim, Karl, 89365 Röfingen (DE); Veilhaber, Gisbert, 89343 Jettingen/Scheppach (DE)
(74) Vertreter: Grünecker, Kinkeldey, Stockmair & Schwanhäusser Anwaltssozietät

(57) **Zusammenfassung**

Die Erfindung bezieht sich auf ein Fonduegerät mit einem Sockel (2) zum Aufstellen des Fonduegeräts auf einer Unterlage und einem im Wesentlichen ringförmigen Schalenträger (3), der drehbar um eine Drehachse auf dem Sockel (2) gelagert ist und radial über den Sockel (2) vorsteht. Um derartige Fonduegeräte zu verbessern, ist eine Führungsbahn (8) und sich daran federelastisch abstützende Führungselemente (19) vorgesehen, durch die der Schalenträger (3) gegenüber dem Sockel (2) senkrecht zur Drehachse abstützbar ist.

## Beschreibung

Die vorliegende Erfindung bezieht sich auf ein Fonduegerät mit einem Sockel zum Aufstellen des Fonduegeräts auf einer Unterlage und einem im Wesentlichen ringförmigen Schalenträger, der drehbar um eine Drehachse auf dem Sockel gelagert ist und radial über den Sockel vorsteht.

Derartige Fonduegeräte sind z.B. aus der DE 37 16 107 bekannt. Der Sockel dieses Fonduegeräts ist im Wesentlichen schalenförmig und weist auf der Oberseite eine Auflagefläche auf, auf der der ringförmige Schalenträger drehbar gelagert ist. Üblicherweise werden Fonduegerät auf einem Tisch abgestellt, so dass die Drehachse, um die sich der Schalenträger dreht, vertikal angeordnet ist. Der Schalenträger dient zur Aufnahme diverser Schalen zur Aufnahme von Fonduebeilagen, wie z.B. Gurken, Zwiebeln und dergleichen. Damit die Schalen möglicht gut erreichbar sind, ragt der Schalenträger radial über den Socken hinaus und ist im Wesentlichen freitragend. Aufgrund des Abstandes zum Boden und der freitragenden Konstruktion des Schalenträgers ist der Platzbedarf des Fonduegeräts auf einem Tisch vergleichsweise gering, da unter dem freitragenden Schalenträger Teller, Schüsseln und dergleichen angeordnet werden können. Gleichzeitig verbessert sich die Zugänglichkeit zu den Schalen für am Tisch Platz nehmende Personen. Je nach gewünschter Zutat kann der Schalenträger von den am Tisch Platz nehmenden Personen verdreht werden. Im Sockel ist weiterhin eine Heizeinrichtung vorgesehen, mit der ein auf dem Sockel angeordneter Fonduetopf aufgeheizt werden kann. Die Heizeinrichtung ist dabei innerhalb des ringförmigen Schalenträgers angeordnet. Der Topf ist geringfügig oberhalb des Schalenträgers positioniert.

Als nachteilig erweist es sich jedoch bei solchen Fonduegeräten, dass es bei unsachgemäßer Bedingung oder stark unterschiedlich beladener Schalen zu heftigen Bewegungen des Schalenträgers kommen kann, wodurch der Inhalt in der Schale verschüttet werden kann. Dies kann beim Betrieb des Fonduegeräts je nach Inhalt der Schalen zur Verschmutzung der Tischwäsche oder gar zu einer Gefährdung der Personen führen.

Aufgabe der Erfindung ist es daher, ein Fonduegerät der eingangs genannten Art zu verbessern.

Die Aufgabe wird erfindungsgemäß gelöst durch ein Fonduegerät der eingangs genannten Art, bei dem eine Führungsbahn und sich daran federelastisch abstützende Führungselemente vorgesehen sind, durch die der Schalenträger gegenüber dem Sockel senkrecht zur Drehachse abstützbar ist.

Aufgrund der federelastisch sich abstützenden Führungselemente findet ein wesentlich genaueres Zentrieren des Schalenträgers gegenüber dem Sockel statt. Hierbei wirken die Führungselemente als Kippsicherung, da es aufgrund der Führungselemente gegenüber herkömmlichen Fonduegeräten weitaus schwieriger ist, ein Kippen des Schalenträgers zu bewirken. Dadurch erhöht sich sowohl Bedienkomfort, als auch die Betriebssicherheit.

In einer vorteilhaften Weiterbildung der Erfindung können die Führungsbahn am Sockel und die Führungselemente am Schalenträger angeordnet sein. Dadurch lässt sich der Sockel mit einfachen Geometrien verwirklichen und die zumeist komplizierte ausgebildeten Führungselemente können bei der Herstellung des Schalenträgers berücksichtigt werden und leichter in die ohnehin zumeist kompliziertere Geometrie integriert werden.

Von Vorteil kann es zudem sein, wenn die Führungsbahn im Wesentlichen zylindrisch mit einer sich zur Drehachse parallel erstreckenden Lauffläche ausgebildet ist. Die Führungsbahn lässt sich dann in der Art eines um laufenden Kragens am Sockel gestalten. Formentechnisch lässt sich ein solcher Kragen bei solchen aus Kunststoff sehr einfach verwirklichen.

Um eine gute Zentrierung des Schalenträgers auf dem Sockel zu gewährleisten können die Führungselemente gleichmäßig voneinander beabstandet sein und wenigstens drei Führungselemente vorgesehen sein.

In einer vorteilhaften Weiterbildung kann das Fonduegerät eine Heizeinrichtung mit einer Heizplatte aufweisen und die Heizplatte innerhalb des Schalterträgers angeordnet sein.

Insbesondere bei elektrisch betriebenen Fonduegeräten lässt sich dadurch ein kompakter Aufbau des Fonduegeräts realisieren.

Weiterhin kann es sich als günstig erweisen, wenn die Führungselemente an elastischen Zungen angelenkt sind, die am Schalenträger an einem Verbindungsabschnitt angebracht sind. Durch solche Zungen lässt sich auf sehr einfache Weise ein elastischen Vorspannen der Führungselemente gegen die Führungsbahn realisieren.

Um ein Verdrehen des Schalenträgers zu vereinfachen können die Führungselemente Rollen aufweisen, die auf der Führungsbahn abrollen.

Dabei kann es sich als vorteilhaft erweisen, wenn die Führungsrollen vom Verbindungsabschnitt beabstandet sind. Dadurch lässt sich ein möglichst großer elastischer Federweg der Führungsrollen in radialer Richtung zur Drehachse verwirklichen.

Weiterhin kann es sich als günstig erweisen, wenn die Zungen sich in Richtung zur Unterlage hin erstrecken. Sie ragen dann nach unten und sind auf diese Weise weniger sichtbar und auch weniger verschmutzungsgefährdet. Gleichzeitig wird die Kippgefahr der Schalenträger verringert, da durch die tiefe Anordnung die Führungsrollen nicht außer Eingriff kommen können.

Um die Herstellungskosten herabzusetzen, können die Zungen und der Schalenträger einstückig aus Kunststoff ausgebildet sein. Um die Kippsicherheit des Schalenträgers weiter zu verbessern kann der Schalenträger einen Zentrierrand aufweisen dessen Innendurchmesser geringfügig größer als der Außendurchmesser eines Führungsrandes des Sockels ist.

Zur Vereinfachung der Geometrien des Sockels kann der Führungsrand durch die Führungsbahn selbst gebildet werden. Weiterhin kann es sich als günstig erweisen, wenn die Rollen und der Zentrierrand voneinander beabstandet sind. Bei einem leichten Ankippen des Schalenträgers gelangt dadurch der Zentrierrand mit dem Sockel in Anlage um ein weiteres Kippen zu verhindern.

Um die Verschmutzung der Rollen zu verhindern, kann der Zentrierrand oberhalb der Rollen angeordnet sein.

Um den Rollwiderstand herabzusetzen können die Drehachsen der Rollen im Wesentlichen parallel zur Drehachse des Schalenträgers verlaufen.

Zudem kann es sich als vorteilhaft erweisen, wenn die Rollen nur Rollenachsen aufweisen und die Rollenachsen und die Rollen einstückig ausgebildet sind und in Rollenhaltern an den Zungen durch Verrasten montierbar sind.

In einer vorteilhaften Weiterbildung der Erfindung kann die Führungsbahn eine umlaufende Nut aufweisen, in die die Rollen formschlüssig eingreifen. Dadurch lässt sich zusätzlich die Kippsicherheit erhöhen. Beim Montieren des Schalenträgers kann dann ein deutlich wahrnehmbares Einrasten der Rollen in die Nut akustisch wahrgenommen werden. Der Formschluss zwischen Nut und Rollen kann zusätzlich die Kippsicherheit erhöhen.

Nachfolgend wird die Wirkung und Funktionsweise der Erfindung anhand eines Ausführungsbeispiels näher erläutert.

Es zeigen:
- Fig. 1: das erfindungsgemäße Fonduegerät in einer Seitenansicht;
- Fig. 2: den Schalenträger des Fonduegeräts aus Fig. 1 in einer Ansicht von unten;
- Fig. 3: das Detail aus Fig. 2;

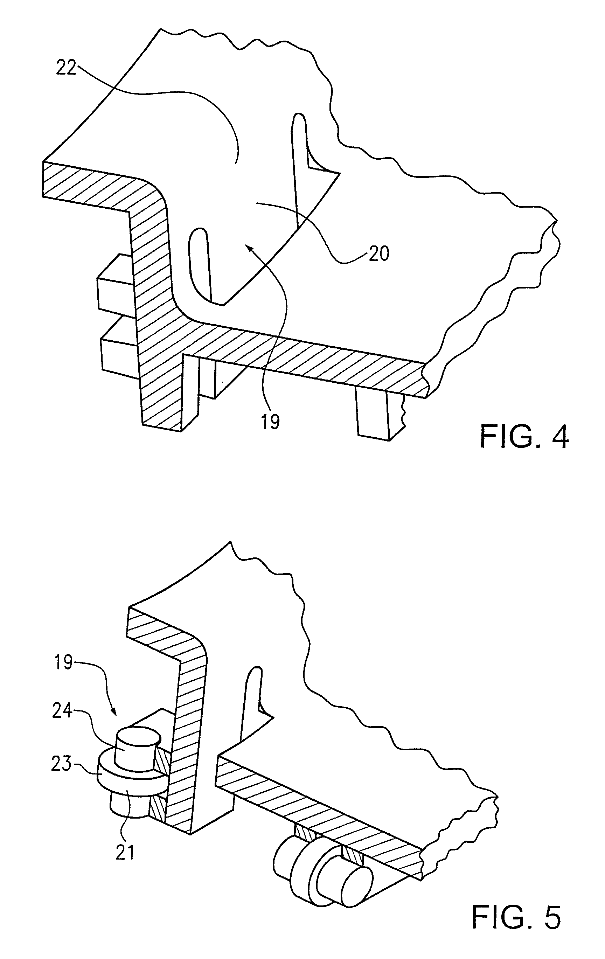

- Fig. 4: eine teilweise Schnittansicht des Schalenträgers;
- Fig. 5: eine weitere Schnittansicht des Schalenträgers;
- Fig. 6: das Fonduegerät aus Fig. 1 mit gekipptem Schalenträger.

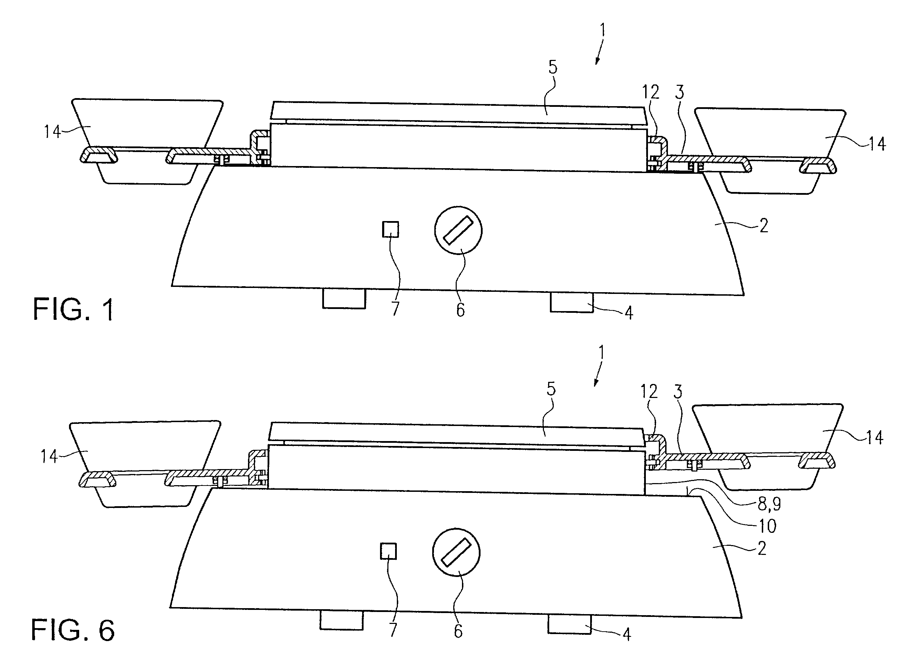

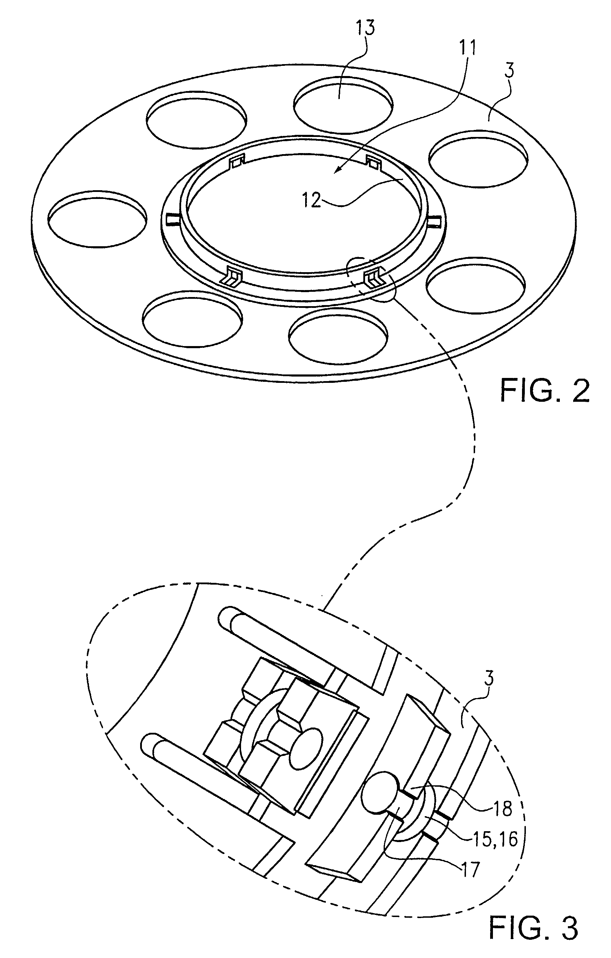

Fig. 1 zeigt das erfindungsgemäße Fonduegerät 1 in einer Seitenansicht mit einem Sockel 2 und einem Schalenträger 3. Der besseren Übersicht und zum erleichterten Erklären der Funktionsweise des erfindungsgemäßen Fonduegeräts ist der Schalenträger 3 in einer Schnittansicht dargestellt. Insgesamt ist der Schalenträger 3 im Wesentlichen ringförmig, so wie dies der Fig. 2 entnehmbar ist.

Der Sockel verfügt über Standfüße 4, mittels derer der Sockel auf einer nicht dargestellten Unterlage, wie z.B. einem Tisch oder dergleichen abgestellt werden kann. Im Sockel integriert ist eine Heizeinrichtung mit einer Heizplatte 5. Bei der Heizplatte 5 handelt es sich um eine elektrische Heizplatte, wobei die elektrische Schaltung in den Sockel 2 integriert ist. Bei der Darstellung in Fig. 1 ist ein Drehschalter 6 und eine Kontrolllampe 7 vorgesehen. Mit dem Drehschalter 6 kann die Temperatur oder Heizleistung der Heizplatte vorgewählt werden. Die Kontrolllampe 7 deutet auf ein eingeschaltetes Gerät hin, wenn sie aufleuchtet. Etwaige Kabel sind aus Gründen der Übersicht ebensowenig dargestellt wie ein Fonduetopf, der in bekannter Weise auf der Heizplatte 5 positioniert werden kann.

Der Sockel verfügt über eine Führungsbahn 8 mit einer im Wesentlichen zylindrischen Lauffläche 9. Bei auf einem Tisch abgestellten Fonduegerät erstreckt sich diese Lauffläche 9 im Wesentlichen vertikal und definiert eine Drehachse, um die der Schalenträger 3 drehbar ist. In vertikaler Richtung stützt sich der Schalenträger 3 auf einer ringförmigen Auflagefläche 10 ab, die an die Führungsbahn 8 anschließt.

Die Führungsbahn 8 bildet gleichzeitig auch einen Führungsrand für den Schalenträger 3.

Der Schalenträger 3 ist, wie bereits eingangs erwähnt, im Wesentlichen ringförmig und verfügt über eine im Wesentlichen kreisrunde Durchgangsöffnung 11, die durch einen Zentrierrand 12 definiert wird. Weiterhin verfügt der Schalenträger 3 über mehrere Aufnahmeöffnungen 13, in die jeweils Schalen 14 eingesetzt werden können. Der Schalenträger 3 ist als freitragender Schalenträger ausgebildet und erstreckt sich in radialer Richtung über den Sockel 2 hinaus.

Der Schalenträger 3 stützt sich über Stützrollen 15 in vertikaler Richtung parallel zur Drehachse an der Auflagefläche 10 ab. Die Stützrollen verfügen über einen Rollenabschnitt 16 und eine Rollenachse 17, wobei Rollenabschnitt und Rollenachse einstückig aus Kunststoff hergestellt sind.

Die Rollenachsen 17 sind in Stützrollenaufnahmen drehbar gelagert. Die Stützrollenaufnahmen 18 sind dabei so gestaltet, dass die Stützrollen 15 in die Stützrollenaufnahmen 18 eingedrückt werden können. Insgesamt sind sechs Stützrollen 15 am Schalenträger 3 angebracht.

Weiterhin verfügt der Schalenträger 3 über Führungselemente 19, die durch elastische Zungen 20 und Führungsrollen 21 gebildet werden. Verbindungsabschnitte 22 verbinden die Zungen 20 mit dem Schalenträger 3. Wie die Stützrollen sind auch die Führungsrollen 21 aus Kunststoff gefertigt und verfügen über einen Rollenabschnitt 23 und eine Rollenachse 24. Mit den Rollenachsen 24 sind die Führungsrollen 21 in Führungsrollenaufnahmen 25 drehbar gelagert.

Der Schalenträger 3 mit Zungen 20 und Verbindungsabschnitte 22 ist einstückig aus Kunststoff geformt. Durch die Gestaltung mit den Zungen sind die Führungsrollen 21 elastisch gegenüber dem Schalenträger 3 gelagert.

Mehrere Zungen 20 mit Führungsrollen 21 sind am Umfang des Schalenträgers verteilt angebracht. Im vorliegenden Beispiel werden sechs gleichmäßig voneinander beabstandete Zungen verwendet. Die Rollenabschnitte 23 der Führungsrollen 21 liegen bei nicht montiertem Schalenträger auf einem Kreis, dessen Durchmesser geringfügig kleiner als der Außendurchmesser der Führungsbahn 8 ist. Dadurch wird bei montiertem Schalenträger 3 sichergestellt, dass die Zungen 20 radial nach außen vorgespannt werden und die Führungsrollen 21 dadurch unter Vorspannung gegen die Führungsbahn 8 anliegen.

Die Führungsrollen sind dabei möglichst weit vom Verbindungsabschnitt entfernt angebracht, um eine möglichst große Flexibilität der Zungen zu gewährleisten. Gleichzeitig wird dadurch das Kippverhalten des Schalenträgers im montierten Zustand deutlich verbessert.

Nachfolgend wird die Wirkung und Funktionsweise der Erfindung näher erläutert:

Der Aufbau des Fonduegeräts auf einer Unterlage erfolgt in bekannter Weise. So wird das Fonduegerät mit seinem Sockel 2 mit den Standfüßen 4 z.B. auf einem Tisch aufgestellt. Anschließend kann der Schalenträger 3 auf den Sockel aufgesetzt werden, um die in Fig. 1 dargestellte Konfiguration einzunehmen. Um die Montage zu erleichtern, kann die Führungsbahn 8 an ihrem oberen Rand geringfügig abgerundet sein, um ein leichteres Darübergleiten der Führungsrollen während des Aufsetzens des Schalenträgers 3 zu gewährleisten. Durch die Führungsrollen 21 und die Stützrollen 15 ist der Schalenträger 3 drehbar auf dem Sockel 2 gelagert. Schalen 14 können sodann in die Aufnahmeöffnungen 13 eingesetzt und mit Beilagen gefüllt werden.

Anschließend wird der nicht dargestellte Fonduetopf in bekannter Weise auf die Heizplatte 5 gestellt.

Möchte nun eine Person eine bestimmte Zutat einer der Schalen 14 entnehmen, so kann sie den Schalenträger solange verdrehen, bis die gewünschte Schale der Person am nächsten ist. Die in der Schale enthaltenen Beilagen können sodann entnommen werden.

Durch die Führungsrollen 21 und die Stützrollen 15 ergibt sich eine leichtgängige Verdrehbarkeit des Schalenträgers gegenüber dem Sockel 2.

Durch die gegen die Führungsbahn 8 vorgespannten Führungsrollen 21 ergibt sich eine spielfreie Zentrierung, wodurch sich einerseits die Laufgeräusche beim Verdrehen des Schalenträgers verringern und andererseits die Kippgefahr des Schalenträgers 3 verringert wird. Aufgrund der Zentrierung des Schalenträgers 3 befinden sich der Zentrierrand 12, dessen Innendurchmesser geringfügig größer als der Außendurchmesser der Führungsbahn 8 ist, nicht in Kontakt, wodurch das Laufgeräusch ebenfalls herabgesetzt wird. Dadurch, dass Zentrierrand und Führungsrollen 21 voneinander beabstandet sind gelangt der Führungsrand 12 bei leichtem Ankippen des Schalenträgers 3 in Kontakt mit der Führungsbahn 8 oder aber der Heizplatte 5. Dadurch wird ein weiteres Kippen verhindert. Ein Kippen des Schalenträgers ist somit nur in einem sehr geringen Winkel möglich. Auch ohne dem Zentrierrand wird die Kippsicherheit aufgrund der Vorspannung der Rollen 21 erhöht. Der Zentrierrand verbessert jedoch die Kippsicherheit zusätzlich.

Die Darstellung in Fig. 6 zeigt das erfindungsgemäße Fonduegerät, wobei der Schalenträger leicht angekippt ist. Bei normalem Betrieb liegen sämtliche Stützrollen 15 auf der Auflagefläche 10 auf. Der Schalenträger 3 erstreckt sich dann im Wesentlichen horizontal.

## Patentansprüche

1. Fonduegerät mit einem Sockel (2) zum Aufstellen des Fonduegeräts auf einer Unterlage und einem im Wesentlichen ringförmigen Schalenträger (3), der drehbar um eine Drehachse auf dem Sockel gelagert ist und radial über den Sockel vorsteht, **dadurch gekennzeichnet, dass** eine Führungsbahn (8) und sich daran federelastisch abstützende Führungselemente (19) vorgesehen sind, durch die der Schalenträger gegenüber dem Sockel senkrecht zur Drehachse abstützbar ist.

2. Fonduegerät nach Anspruch 1, **dadurch gekennzeichnet, dass** die Führungsbahn am Sockel und die Führungselemente am Schalenträger angeordnet sind.

3. Fonduegerät nach einem der vorangegangenen Ansprüche, **dadurch gekennzeichnet, dass** die Führungsbahn im Wesentlichen zylindrisch mit einer sich zur Drehachse parallel erstreckenden Lauffläche (8) ausgebildet ist.

4. Fonduegerät nach einem der vorangegangenen Ansprüche, **dadurch gekennzeichnet, dass** die Führungselemente gleichmäßig voneinander beabstandet sind und wenigstens drei Führungselemente vorgesehen sind.

5. Fonduegerät nach einem der vorangegangenen Ansprüche, **dadurch gekennzeichnet, dass** das Fonduegerät eine Heizeinrichtung und eine Heizplatte (5) aufweist und die Heizplatte innerhalb des Schalenträgers (3) angeordnet ist.

6. Fonduegerät nach einem der vorangegangenen Ansprüche, **dadurch gekennzeichnet, dass** die Führungselemente an elastischen Zungen (20) angebracht sind, die am Schalenträger an einem Verbindungsabschnitt (22) angebracht sind.

7. Fonduegerät nach einem der vorangegangenen Ansprüche, **dadurch gekennzeichnet, dass** die Führungselemente Führungsrollen (21) aufweisen, die auf der Führungsbahn (8) abrollen.

8. Fonduegerät nach einem der vorangegangenen Ansprüche, **dadurch gekennzeichnet, dass** die Führungsrollen vom Verbindungsabschnitt beabstandet sind.

9. Fonduegerät nach einem der vorangegangenen Ansprüche, **dadurch gekennzeichnet, dass** die Zungen sich in Richtung zur Unterlagen erstrecken.

10. Fonduegerät nach einem der vorangegangenen Ansprüche, **dadurch gekennzeichnet, dass** die Zungen und der Schalenträger einstückig aus Kunststoff ausgebildet sind.

11. Fonduegerät nach einem der vorangegangenen Ansprüche, **dadurch gekennzeichnet, dass** der Schalenträger einen Zentrierrand (12) aufweist, dessen Innendurchmesser geringfügig größer als der Außendurchmesser eines Führungsrandes des Sockels ist.

12. Fonduegerät nach einem der vorangegangenen Ansprüche, **dadurch gekennzeichnet, dass** der Führungsrand durch die Führungsbahn gebildet wird.

13. Fonduegerät nach einem der vorangegangenen Ansprüche, **dadurch gekennzeichnet, dass** der Zentrierrand oberhalb der Rollen angeordnet ist.

14. Fonduegerät nach einem der vorangegangenen Ansprüche, **dadurch gekennzeichnet, dass** die Führungsrollen und der Zentrierrand voneinander beabstandet sind.

15. Fonduegerät nach einem der vorangegangenen Ansprüche, **dadurch gekennzeichnet, dass** die Drehachsen der Rollen im Wesentlichen parallel zur Drehachse des Schalenträgers verlaufen.

16. Fonduegerät nach einem der vorangegangenen Ansprüche, **dadurch gekennzeichnet, dass** die Rollen und die Rollenachsen einstückig ausgebildet sind und in Rollenhaltern an den Zungen durch Verrasten montierbar sind.

17. Fonduegerät nach einem der vorangegangenen Ansprüche, **dadurch gekennzeichnet, dass** die Führungsbahn eine umlaufende Nut aufweist, in die die Rollen formschlüssig eingreifen.
